(19) Europäisches Patentamt
European Patent Office
Office européen des brevets

(11) EP 0 967 361 B1

(12) EUROPÄISCHE PATENTSCHRIFT

(45) Veröffentlichungstag und Bekanntmachung des Hinweises auf die Patenterteilung:
**07.05.2003 Patentblatt 2003/19**

(51) Int Cl.[7]: **E21B 37/06**

(21) Anmeldenummer: **99111842.3**

(22) Anmeldetag: **19.06.1999**

(54) **Synergistische Mischungen von Phosphorsäureestern mit Carbonsäurederivaten als Asphalten-Dispergatoren**

Synergistic mixtures of phosphoric acid esters with carboxylic acid derivatives as dipersants for asphaltenes

Mélanges synergiques d'esters d'acide phosphorique et de dérivés d'acide carboxylique comme dispersants pour les asphaltènes

(84) Benannte Vertragsstaaten:
**DE GB IT**

(30) Priorität: **25.06.1998 DE 19828352**

(43) Veröffentlichungstag der Anmeldung:
**29.12.1999 Patentblatt 1999/52**

(73) Patentinhaber: **Clariant GmbH**
**65929 Frankfurt am Main (DE)**

(72) Erfinder:
- **Miller, Dennis, Dr.**
**65779 Kelkheim (DE)**
- **Vollmer, Axel**
**65830 Kriftel (DE)**
- **Feustel, Michael, Dr.**
**55278 Köngernheim (DE)**
- **Klug, Peter, Dr.**
**63762 Grossostheim (DE)**

(56) Entgegenhaltungen:
**EP-A- 0 198 225**
**WO-A-93/13294**
**WO-A-94/18430**
**DE-A- 19 642 494**
**DE-A- 19 708 499**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Mischungen von Teilestem der Phosphorsäure mit Carbonsäuren oder deren Derivaten, Rohöle, die diese Mischungen enthalten und ein Verfahren zur Dispergierung von Asphaltenen in Rohölen.

Asphaltene sind Bestandteile von Rohölen. Sie enthalten eine Vielzahl von Strukturen, besonders hochmolekulare kondensierte aromatische Komponenten mit Heteroatomen. Angesichts der Komplexität ihrer Chemie werden Asphaltene als die Ölfraktion beschreiben, die in Benzol, aber nicht in n-Pentan löslich ist.

Im Rohöl liegen Asphaltene normalerweise als kolloidale Dispersion vor. Diese wird durch Ölharze stabilisiert.

Asphaltene können während der Produktion, der Raffination, des Transports und der Lagerung von Rohöl und davon abgeleiteten Produkten, wie z.B. schweres Heizöl, Bunker C Öl oder Schiffsöl, ausfallen. Gemeinsame Ursachen für dieses Ausfallen sind ein Absinken der Temperatur oder ein Wechsel in der Zusammensetzung (z.B. Verdampfung von leicht flüchtigen Bestandteilen). Asphaltene können auch beim Fließen durch poröse Medien ausfallen. Fluten mit $CO_2$ während des Förderprozesses kann Asphaltene zum Ausflocken oder zum Ausfallen bringen.

Manche Öle enthalten Kohlenwasserstoffwachse, die bei niedrigen Temperaturen ausfallen. Wechselwirkungen zwischen dem Ausfallen von Wachs und Asphaltenen können die Gesamtmenge an ausgefallener Substanz oder deren Bildungsgeschwindigkeit erhöhen.

Ausgefallene Asphaltene verursachen Probleme bei der Produktion und bei der Verarbeitung von Rohölen. Asphaltene schlagen sich nieder in Ventilen, Rohren und Fördereinrichtungen. An heißen Oberflächen, wie beispielsweise Wärmetauschem, kann die Carbonisierung dieser Niederschläge ihre Entfernung sehr schwierig machen. Die Niederschläge reduzieren den Wirkungsgrad von Anlagen und können im schlimmsten Fall zu einer kompletten Blokkierung und zu einem Produktionsstop führen, was hohe Kosten verursacht.

Schweröle, die oft zum Antrieb von Schiffen verwendet werden, enthalten beträchtliche Mengen an Asphaltenen. Das Ausfallen von Asphaltenen kann sowohl zu schlechter Verbrennung als auch zu Schwierigkeiten bei der Handhabung und bei der Lagerung des Treibstoffes führen.

Bitumen, Schweröle und Rückstände werden manchmal mit Lösemittel verdünnt, um die Viskosität für den Transport zu reduzieren. Die Handhabung bzw. Stabilität solcher Ölmischungen kann dabei wiederum durch Ausfällung von Asphaltenen nachhaltig beeinträchtigt werden.

Das Ausfallen von Asphaltenen kann durch kleine Mengen an Dispergatoren verhindert oder verringert werden. Diese Substanzen zeigen einen oder mehrere der folgenden Effekte:

a) Die Menge an Niederschlag wird reduziert;
b) der Niederschlag bildet sich langsamer;
c) der Niederschlag ist feiner verteilt; und
d) die Neigung des Niederschlages, sich auf Oberflächen abzulagern, wird reduziert.

Wenn sich bereits Niederschläge an Asphaltenen gebildet haben, können sie durch den Gebrauch von Lösemitteln entfernt werden. Die Zugabe eines Dispergators kann die Wirksamkeit dieser Lösemittel verbessern.

Eine Vielzahl von Asphalten-Dispergatoren sind bereits bekannt.

CA-A-20 29 465 und CA-A-20 75 749 beschreiben Alkylphenolformaldehydharze in Kombination mit hydrophilen-lipophilen Vinylpolymeren. Verschiedene Carbon- und Sulfonsäuren sind als Asphaltendispergatoren bekannt.

Die Asphalten-dispergierenden Eigenschaften von Dodecylbenzolsulfonsäure wurden beschrieben in US-4 414 035, außerdem durch D.-L. Chang und H.S. Fogler (SPE paper No. 25185, 1993) und durch M.N. Bouts et al. (J. pet. Technol. 47, 782-7, 1995).

DE-A-196 42 494 offenbart die Verwendung von Sarkosinaten, welche carboxylständig mit einer $C_7$ - bis $C_{22}$ - Kohlenwasserstoffkette und N-ständig mit H oder einer $C_1$ - bis $C_{22}$- Kohlenwasserstoffkette substituiert sind, als Asphaltendispergatoren.

WO-93/13294 offenbart die Verwendung von Estem der Phosphorsäure oder deren Salze mit Fettsäure-Oligo-Dialkanolamiden als Inkrustationsinhibitor für organische Feststoffe.

Die Verwendung von Phosphorsäureestern zur Dispergierung von Asphaltenen wird in DE-A-3511 760 und CA-A-11 42 114 offenbart.

Die bisher bekannten Dispergatoren können die durch das Ausfallen von Asphaltenen verursachten Probleme nur teilweise lösen. Da Öle in ihrer Zusammensetzung variieren, können einzelne Dispergatoren nur in einem beschränkten Bereich wirksam arbeiten. Manchmal haben sogar kleine Änderungen in der Ölzusammensetzung einen großen Effekt auf die Dispergiereigenschaften für Asphaltene. Die erforderliche Dosierung kann dann für eine wirtschaftliche Problemlösung zu hoch sein. Deshalb sind in einigen Fällen die bekannten Dispergatoren nicht zufriedenstellend und zusätzliche Typen sind erforderlich.

Es bestand somit die Aufgabe, neue Asphalten-Dispergatoren zur Verfügung zu stellen, die die beschriebenen Nachteile der bisher bekannten Dispergatoren nicht aufweisen.

Es wurde nun gefunden, daß die Wirkung von Asphaltendispergatoren auf Basis von Carbonsäuren durch Zusatz von kleineren Mengen saurer Alkylphosphorsäureester stark erhöht wird. Damit können solche Dispergatoren bei niedrigerer Dosierung eingesetzt werden.

Gegenstand der Erfindung ist somit eine synergistische Mischung aus

A 5 bis 99 Gew.-% einer Carbonsäure mit mehr als 4 Kohlenstoffatomen, einer Ethercarbonsäure mit $C_8$-$C_{22}$-Alkyl-, $C_8$-$C_{22}$-Alkenyl- oder $C_6$-$C_{18}$-Alkylarylsubstituenten, oder einer Amidocarbonsäure der Formel

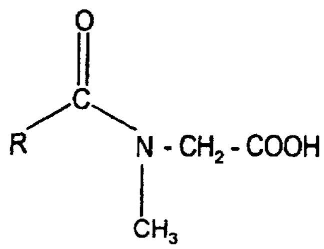

worin R für $C_7$-$C_{21}$-Alkyl oder -Alkenyl steht, oder Mischungen daraus,

B 1 bis 95 Gew.-% eines Phosphorsäuremono- oder -diesters, oder Mischungen daraus, der mit $C_8$-$C_{22}$-Alkyl, $C_8$-$C_{22}$-Alkenyl, $C_6$-$C_{18}$-Alkylaryl oder alkoxylierten Gruppen substituiert ist

wobei die Summe aus den Komponenten A und B 100 Gew.-% ergibt.

Handelt es sich bei der Komponente A um eine Carbonsäure, so enthält diese vorzugsweise 8 bis 22, insbesondere 12 bis 18 Kohlenstoffatome. Ist A eine Ethercarbonsäure der Formel $RO(CH_2CH_2O)_nCH_2COOH$, so kann diese in einer bevorzugten Ausführungsform der Erfindung mit bis zu 20 Einheiten Ethylenoxid ethoxiliert sein, vorzugsweise mit 1 bis 10 Einheiten Ethylenoxid. Bei den in Komponente A verwendbaren Amidocarbonsäuren handelt es sich vorzugsweise um Sarcoside der Formel

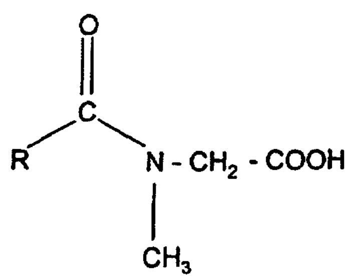

worin R für $C_{11}$-$C_{17}$-Alkyl oder -Alkenyl steht.

Phosphorsäureester sind in der Regel Mischungen von Mono-, Di- und Triester, wobei die Mono- und Diester Säuren sind. Die Anteile dieser Komponenten hängen vom Produktionsweg ab. Phosphorsäureester können auf Basis von Fettalkoholen, ethoxylierten Fettalkoholen, und ethoxylierten Alkylphenolen hergestellt werden.

In einer bevorzugten Ausführungsform der Erfindung ist der als Komponente B genannte Phosphorsäureester mit bis zu 20 Einheiten Ethylenoxid pro Alkylrest ethoxiliert, vorzugsweise mit 1 - 10 Einheiten Ethylenoxid. Ethoxylierte Phosphorsäureester entsprechen der Formel

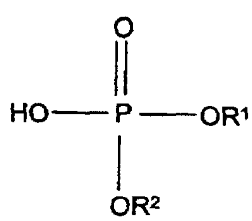

worin $R^1$ Wasserstoff oder eine Gruppe $(CH_2CH_2O)_nR^3$ und $R^2$ eine Gruppe $(CH_2CH_2O)_mR^4$ bedeuten.

$R^3$ und $R^4$ bedeuten vorzugsweise $C_1$-$C_{22}$-Alkyl,$C_2$-$C_{22}$-Alkenyl oder $C_6$-$C_{18}$-Alkylaryl. m und n stehen für ganze Zahlen von vorzugsweise 1 bis 20, insbesondere 1 bis 10.

Ist der Phosphorsäureester mit Alkyl- oder Alkenylgruppen substituiert, so können diese verzweigt oder unverzweigt sein. Ihre bevorzugte Kettenlänge beträgt zwischen 10 und 20, insbesondere zwischen 12 und 18 Kohlenstoffatomen. Trägt der Phosphorsäureester einen Alkylarylsubstituenten, so ist dieser vorzugsweise vom Benzol oder Naphthalin abgeleitet.

Ein weiterer Gegenstand der Erfindung sind Rohöle und davon abgeleitete Produkte, enthaltend als Asphalten-Dispergator eine synergistische Kombination von Phosphorsäureestem mit Carbonsäuren oder Carbonsäurederivaten, wie vorstehend beschrieben.

Von Rohölen abgeleitete Produkte sind beispielsweise schweres Heizöl, Schiffsöl oder Bitumen.

Ein weiterer Gegenstand der Erfindung ist ein Verfahren zur Asphaltendispergierung in Rohölen durch Zugabe der erfindungsgemäßen Mischungen.

Die erfindungsgemäßen synergistischen Mischungen können mit anderen Typen von Asphaltendispergatoren kombiniert werden, z.B. mit Alkylphenol-Formaldehyd-Harzen. Alkylphenolformaldehydharze können durch saure oder basische Katalyse hergestellt werden. Die sauer katalysierten Verbindungen sind vorwiegend linear, während die basisch katalysierten Verbindungen einen hohen Anteil von cyclischem Material enthalten (siehe B. Rowan in D. Karsa (Hrsg) "Industrial application of surfactants III", S. 247).

Die erfindungsgemäße synergistische Mischung wird in einer Konzentration von 0,5 bis 10.000 ppm, vorzugsweise von 2 bis 2.000 ppm eingesetzt.

Zur leichteren Dosierung kann diese Mischung als Lösung in einem ölmischbaren Lösemittel formuliert werden, wie beispielsweise aromatische Kohlenwasserstoffe oder Mischungen von Kohlenwasserstoffen und einem aliphatischen Alkohol.

Da die erfindungsgemäße synergistische Mischung auf einer Kombination von Substanzen basiert, ist sie für eine Änderung der Zusammensetzung des Öls weniger empfindlich. Dies verbessert ihre Zuverlässigkeit.

Beispiele

Komponente A

| Nr. | Chemische Zusammensetzung |
|---|---|
| A1 | Oleylsarcosin<br>$C_{17}H_{33}CON(CH_3)CH_2COOH$ |
| A2 | Ethercarbonsäure<br>$C_{12/14}H_{25/29}(CH_2CH_2O)_{1,8}CH_2COOH$ |
| A3 | Ölsäure<br>$C_{17}H_{33}COOH$ |

Komponente B

| Nr. | Chemische Zusammensetzung |
|---|---|
| B1 | Phosphorsäureester auf Basis Nonylphenol + 4 Mol Ethylenoxid |
| B2 | Mono-/Diphosphorsäureester auf Basis von $C_{18}$ Guerbetalkohol |

Beispiele 1 und 2 demonstrieren die synergistische Wirkung von Mischungen von Carbonsäuren und Phosphorsäureester. Bei dieser niedrigen Konzentration zeigen die Einzelkomponenten keine Wirkung, aber die Mischung zeigt eine gute Dispergierwirkung. Weitere erfindungsgemäße Mischungen werden in den Beispielen 3 bis 5 dargestellt. Bei dieser Versuchsreihe betrug die maximale Dispergierwirkung, $A_{max}$, etwa 140 %.

Beispiel 1a

| Konzentration [ppm] | | Dispergierwirkung A[%] |
|---|---|---|
| A1 | B1 | |
| 113 | 38 | 118 |
| 113 | 0 | 0 |
| 0 | 38 | 0 |

Beispiel 1b

| Konzentration [ppm] | | Dispergierwirkung A [%] |
|---|---|---|
| A1 | B1 | |
| 128 | 22 | 51 |
| 128 | 0 | 0 |
| 0 | 22 | 0 |

Beispiel 2

| Konzentration [ppm] | | Dispergierwirkung A [%] |
|---|---|---|
| A1 | B2 | |
| 113 | 38 | 116 |
| 113 | 0 | 0 |
| 0 | 38 | 0 |

| Beispiel Nr. | Mischung | Dispergierwirkung A [%] |
|---|---|---|
| 3 | 75 ppm A1 + 75 ppm B1 | 137 |
| | | |
| 4 | 113 ppm A1 + 38 ppm B2 | 79 |
| 5 | 120 ppm A3 + 15 ppm 81 + 15 ppm Nonylphenolformaldehydharz | 138 |

Prüfung der Wirksamkeit von Asphaltendispergatoren

Prinzip des Dispergiertestes

Dieser Test basiert auf der Tatsache, daß Asphaltene in aromatischen, aber nicht in aliphatischen Kohlenwasserstoffen löslich sind. Somit können Dispergatoren getestet werden, indem man das Öl oder extrahierte Asphaltene in einem aromatischen Lösemittel löst und indem man dann einen aliphatischen Kohlenwasserstoff zugibt, um einen Niederschlag zu erzeugen. Da Asphaltene von dunkler Farbe sind, kann das Ausmaß des Niederschlages durch eine kolorimetrische Messung der überstehenden Flüssigkeit bestimmt werden. Je dunkler die überstehende Flüssigkeit ist, desto mehr Asphaltene bleiben dispergiert, d.h. umso besser ist der Dispergator. Dieser Test wird beschrieben in CA-A-20 29 465. In unserer Version des Tests wird das Fällungsmedium so ausgewählt, daß die Asphaltene zum größten Teil, aber nicht komplett ausfallen.

Vorschrift Dispergiertest

a) Eine 25 %ige Öl-Lösung in Toluol wird filtriert, um Verunreinigungen zu beseitigen;
b) 9,5 ml Heptan als Fällungsmittel für Asphaltene und 0,5 ml Toluol/Dispergator-Mischung (25:1) in ein gut 10 ml fassendes graduiertes Glasröhrchen vorlegen und gut schütteln. Dies entspricht einer Dispergatorkonzentration von 2000 ppm. Bei Bedarf kann die Menge Dispergator variiert werden. Für die Nullproben wird reines Toluol verwendet;
c) in das Glasröhrchen wird dann 0,1 ml von der gefilterten Öl-Lösung zugegeben und ebenfalls gut geschüttelt;
d) die Probe 2 Stunden ohne Erschütterungen stehenlassen. Die ausgefällten Asphaltene sollen sich am Boden des Röhrchens sammeln können;
e) nach Ablauf dieser Zeit wird das Volumen des Sediments an Hand der Graduierung abgeschätzt, das Aussehen der gesamten Probe protokolliert und dann wird von der überständigen Phase 1 ml vorsichtig mit einer Pipette aufgenommen;
f) die abgesaugte Menge wird in 5 ml einer 99:1 Toluol-Triethanolamin-Mischung gelöst und bei 600 nm photometriert.

Bewertung des Dispergiertests

Als relatives Maß für die Dispergierung wird folgender Ausdruck genommen

$$A = 100\,(D-D_0)/D_0,$$

wobei D und $D_0$ optische Dichte von Meßlösung und Blindprobe sind. Der maximal erreichbare Wert von A, $A_{max}$, entspricht vollständiger Dispergierung der Asphaltene. Sie kann abgeschätzt werden, indem ein Versuch ohne Dispergator, mit Toluol anstatt Heptan, durchgeführt wird. Dadurch bleiben die Asphaltene vollständig dispergiert. Das Volumen des Sediments liefert eine weitere Information über die Wirksamkeit des Dispergators. Je kleiner die Menge an Sediment ist, desto besser dispergiert ist die Probe.

## Patentansprüche

**1.** Mischung aus

A 5 bis 99 Gew.-% einer Carbonsäure mit mehr als 4 Kohlenstoffatomen, einer Ethercarbonsäure mit $C_8$-$C_{22}$-Alkyl-, $C_8$-$C_{22}$-Alkenyl- oder $C_6$-$C_{18}$-Alkylarylsubstituenten, oder einer Amidocarbonsäure der Formel

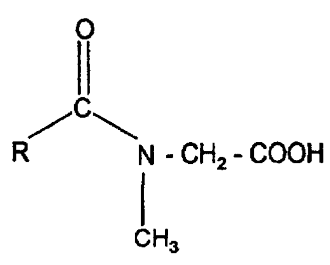

worin R für $C_7$-$C_{21}$-Alkyl oder-Alkenyl steht, oder Mischungen daraus,

B 1 bis 95 Gew.-% eines Phosphorsäuremono- oder -diesters, oder Mischungen daraus, der mit $C_8$-$C_{22}$-Alkyl, $C_8$-$C_{22}$-Alkenyl, $C_6$-$C_{18}$-Alkylaryl oder alkoxylierten Gruppen substituiert ist

wobei die Summe aus den Komponenten A und B 100 Gew.-% ergibt.

**2.** Mischung nach Anspruch 1, **dadurch gekennzeichnet, daß** Komponente B einen Phosphorsäureester umfaßt, der mit bis zu 20 mol, insbesondere mit 1 bis 10 mol Ethylenoxid ethoxiliert ist.

**3.** Mischung nach Anspruch 1 und/oder 2, **dadurch gekennzeichnet daß** Komponente B einen Phosphorsäureester umfaßt, der Alkyl- oder Alkenylsubstituenten der Kettenlängen von 10 bis 20, insbesondere 12 bis 18 Kohlenstoffatomen trägt.

**4.** Mischung nach einem oder mehreren der Ansprüche 1 bis 3, **dadurch gekennzeichnet, daß** Komponente B einen Phosphorsäureester umfaßt, der Alkylarylsubstituenten trägt, die sich von Benzol oder Naphthalin ableiten.

**5.** Mischung nach einem oder mehreren der Ansprüche 1 bis 4, **dadurch gekennzeichnet, daß** Komponente A eine Carbonsäure umfaßt, die 8 bis 22, insbesondere 12 bis 18 Kohlenstoffatome enthält.

**6.** Mischung nach einem oder mehreren der Ansprüche 1 bis 5, **dadurch gekennzeichnet, daß** Komponente A eine Ethercarbonsäure umfaßt, die mit bis zu 20 mol, insbesondere mit 1 bis 10 mol Ethylenoxid ethoxiliert ist.

**7.** Mischung nach einem oder mehreren der Ansprüche 1 bis 6, **dadurch gekennzeichnet, daß** in Komponente A R für $C_{11}$-$C_{17}$-Alkyl oder -Alkenyl steht.

**8.** Rohöle und davon abgeleitete Produkte, enthaltend Mischungen nach einem oder mehreren der Ansprüche 1 bis 7.

**9.** Verfahren zur Asphaltendispergierung in Rohölen und davon abgeleiteten Produkten, **gekennzeichnet durch** die Zugabe von Mischungen nach einem oder mehreren der Ansprüche 1 bis 7 zum Rohöl bzw. den davon abgeleiteten Produkten.

## Claims

**1.** A mixture of

A from 5 to 99% by weight of a carboxylic acid having more than 4 carbon atoms, an ethercarboxylic acid containing $C_8$-$C_{22}$-alkyl, $C_8$-$C_{22}$-alkenyl or $C_6$-$C_{18}$-alkylaryl substituents or an amidocarboxylic acid of the formula

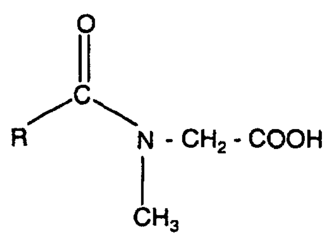

in which R is $C_7$-$C_{21}$-alkyl or -alkenyl, or mixtures thereof,

B from 1 to 95% by weight of a phosphoric mono- or diester, or mixtures thereof, which is substituted by $C_8$-$C_{22}$-alkyl, $C_8$-$C_{22}$-alkenyl, $C_6$-$C_{18}$-alkylaryl or alkoxylated groups,

where the sum of components A and B is 100% by weight.

**2.** A mixture as claimed in claim 1, wherein component B includes a phosphoric ester which has been ethoxylated with up to 20 mol, in particular from 1 to 10 mol, of ethylene oxide.

**3.** A mixture as claimed in claim 1 and/or 2, wherein component B includes a phosphoric ester carrying alkyl or alkenyl substituents having a chain length of from 10 to 20, in particular from 12 to 18, carbon atoms.

**4.** A mixture as claimed in one or more of claims 1 to 3, wherein component B includes a phosphoric ester carrying alkylaryl substituents derived from benzene or naphthalene.

**5.** A mixture as claimed in one or more of claims 1 to 4, wherein component A includes a carboxylic acid containing from 8 to 22, in particular from 12 to 18, carbon atoms.

**6.** A mixture as claimed in one or more of claims 1 to 5, wherein component A includes an ethercarboxylic acid which has been ethoxylated with up to 20 mol, in particular from 1 to 10 mol, of ethylene oxide.

**7.** A mixture as claimed in one or more of claims 1 to 6, wherein R is $C_{11}$-$C_{17}$-alkyl or -alkenyl in component A.

**8.** A crude oil or a product derived therefrom, containing a mixture as claimed in one or more of claims 1 to 7.

**9.** A process for dispersing asphaltenes in crude oils and products derived therefrom, which comprises adding a mixture as claimed in one or more of claims 1 to 7 to the crude oil or the product derived therefrom.

**Revendications**

**1.** Mélange de

A 5 à 99 % en poids d'un acide carboxylique présentant plus de 4 atomes de carbone, d'un acide éthercarboxylique substitué par des substituants alkyle en $C_8$-$C_{22}$, alcényle en $C_8$-$C_{22}$ ou alkylaryle en $C_6$-$C_{18}$, ou d'un acide amidocarboxylique de formule

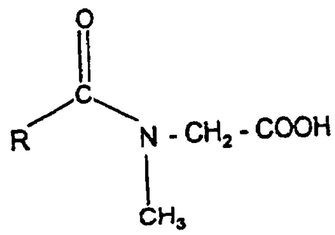

où R représente un groupe alkyle ou alcényle en $C_7$-$C_{12}$, ou des mélanges de ces substances,

B 1 à 95 % en poids d'un mono- ou diester de l'acide phosphorique ou de leurs mélanges, substitué par des substituants alkyle en $C_8$-$C_{22}$, alcényle en $C_8$-$C_{22}$, alkylaryle en $C_6$-$C_{18}$ ou par des groupes alkoxylés,

la somme des composants A et B est égal à 100 % en poids.

**2.** Mélange selon la revendication 1, **caractérisé en ce que** le composant B comprend un ester de l'acide phosphorique qui est oxéthylé jusqu'à 20 % molaires, en particulier par 1 à 10 moles d'oxyde d'éthylène.

**3.** Mélange selon la revendication 1 et/ou 2, **caractérisé en ce que** le composant B comprend un ester de l'acide phosphorique qui porte des substituants alkyle ou alcényle ayant une longueur de chaîne de 10 à 20, en particulier de 12 à 18 atomes de carbone.

**4.** Mélange selon une ou plusieurs des revendications 1 à 3, **caractérisé en ce que** le composant B comprend un ester de l'acide phosphorique qui porte des substituants alkylaryles dérivant du benzène ou du naphtalène.

**5.** Mélange selon une ou plusieurs des revendications 1 à 4, **caractérisé en ce que** le composant A comprend un acide carboxylique présentant 8 à 22, en particulier 8 à 12 atomes de carbone.

**6.** Mélange selon une ou plusieurs des revendications 1 à 5, **caractérisé en ce que** le composant A comprend un acide éthercarboxylique qui est oxéthylé jusqu'à 20 % molaires, en particulier par 1 à 10 moles d'oxyde d'éthylène.

**7.** Mélange selon une ou plusieurs des revendications 1 à 7, **caractérisé en ce que** dans le composant A R représente un groupe alkyle ou alcényle en $C_{11}$-$C_{17}$.

**8.** Pétroles bruts et produits dérivés, renfermant des mélanges selon une ou plusieurs des revendications 1 à 7.

**9.** Procédé pour la dispersion d'asphaltènes dans des pétroles bruts et produits dérivés, **caractérisé par** l'ajout de mélanges selon une ou plusieurs des revendications 1 à 7 au pétrole brut ou aux produits qui en dérivent.